# EUROPÄISCHE PATENTSCHRIFT

(11) **EP 2 085 332 B1**
(45) Veröffentlichungstag und Bekanntmachung des Hinweises auf die Patenterteilung: **05.01.2011**
(21) Anmeldenummer: 09000523.2
(22) Anmeldetag: 15.01.2009
(51) Int. Cl.: B65G 1/02

(54) **Fachbodenebene für ein Lagerregal**
Shelving levels for a storage shelf
Surface de posage pour un rayonnage de stockage

(30) Priorität: 30.01.2008 DE 102008006723
(43) Veröffentlichungstag der Anmeldung: 05.08.2009
(73) Patentinhaber: BITO-Lagertechnik Bittmann GmbH, 55590 Meisenheim (DE)
(72) Erfinder: Lörsch, Andreas, 55621 Hundsbach (DE)
(74) Vertreter: Richardt, Markus Albert

(56) Entgegenhaltungen:
- WO-A-86/06261
- US-A- 3 072 262
- US-A- 4 216 729
- US-B1- 6 286 693

## Beschreibung

Die Erfindung betrifft eine Fachbodenebene für ein Lagerregal nach dem Oberbegriff des Patentanspruchs 1 sowie ein mit wenigstens einer solchen Fachbodenebene versehenes Lagerregal.

Eine Fachbodenebene ist aus der EP 0 882 660 B1 bekannt. Bei dieser bekannten Fachbodenebene sind in kastenförmigen Längsträgern an der oberen und inneren Fläche mehrere nach oben offene Aussparungen in form von Schlitzen ausgebildet, in die Halteelemente von Querträgern von oben eingesetzt und mittels federnder Endabschnitte in den Schlitzen verrastet werden. Durch die nach oben offenen Schlitze wird die Festigkeit der Längsträger geschwächt. Um ihr Durchbiegen bei höheren Belastungen zu vermeiden, sind größere Materialstärken erforderlich, was zu erhöhten Kosten führt. Durch die einseitige Fixierung wird die Biegefestigkeit der Längsträger beeinträchtigt.

US 4 216 729 A1 beschreibt eine Fachbodenebene mit verbesserter Biegefestigkeit gemäss dem Oberbegriff des Anspruchs 1.

Diese Fachbodenebene enthält Querträgern und Längsträgern, mit komplizierter Geometrie. Bei dieser Fachbodenebene sind die Querträgern und das Gitter verschweisst. Es ist somit nicht möglich diese abzuscheiden, um die Fachbodenebene abhängig von der Gewichtverteilung der auf der Fachbodenebene liegenden Produkten anzupassen. Ferner ist es möglich in dieser Fachbodenebene, das Gitter zu verschieben, weil ein Freiraum zwischen den Längsträgern und das Gitter vorgesehen ist.

Der Erfindung liegt die Aufgabe zugrunde, eine Fachbodenebene für ein Lagerregal zu schaffen, die kostengünstiger, flexibler und stabiler als die bekannten Fachbodenebenen ist.

Diese Aufgabe wird erfindungsgemäß durch eine Fachbodenebene mit den Merkmalen des Patentanspruchs 1 gelöst. Vorteilhafte Weiterbildungen der erfindungsgemäßen Fachbodenebene sind Gegenstand der Patentansprüche 2 bis 5. Ein mit wenigstens einer Fachbodenebene versehenes Lagerregal ist Gegenstand des Patentanspruchs 6.

Die Tragfähigkeit der erfindungsgemäßen Fachebene kann auf einfache Weise an die Belastung angepasst werden, indem die Querträger mit ihren Hakenelementen auf die Längsträger aufgelegt werden und anschließend das Fachbodenelement so aufgesetzt wird, dass die Hakenelemente innerhalb der Kantenöffnungen liegen. Durch diese Anordnung der Hakenelemente innerhalb der Kantenöffnungen wird eine seitliche Verschiebung der Querträger verhindert. Es ist somit keine zusätzliche Arretierung oder Verbindung zwischen dem Fach-bodenelement und den Querträgern nötig. Die Arretierung der Querträger bezüglich des Fachbodenelements und des Fachbodenelements in der Fachebene ist ohne zusätzliche Maßnahmen möglich.

Vorzugsweise umfasst der wenigstens eine Querträger eine obere Auflagefläche, auf der das Fachbodenelement aufliegt. In diesem Fall wird das Fachbodenelement sowohl von den Längsträgern als auch von den Querträgern getragen.

Bei einer bevorzugten Ausführungsform wird das Fachbodenelement von einem auf den Längsträgern und dem wenigstens einen Querträger aufliegenden Gitter gebildet, das in Längsrichtung im Abstand zueinander verlaufende Gitterlängselemente und in Querrichtung im Abstand zueinander verlaufende Gitterquerelemente aufweist sowie Gitteröffnungen umfasst, die jeweils von zwei benachbarten Gitterlängselementen und zwei benachbarten Gitterquerelementen begrenzt werden. Die in Längsrichtung des Gitters verlaufende Kantlinie läuft in einem in Querrichtung zwischenliegenden Bereich von Kantenöffnungen bildenden Gitteröffnungen. Da das Fachbodenelement als Gitter ausgebildet ist, ist sein Gewicht deutlich verringert. Die Hakenelemente können in den Gitteröffnungen im Bereich der Kantlinie angeordnet werden.

Die Kantöffnungen sind vorzugsweise rechteckig ausgebildet und die Hakenelemente so gestaltet, dass sie an die Gitterquerelemente der zugeordneten Kantöffnung im Wesentlichen angrenzen. Dies verhindert eine seitliche Verschiebung der Querträger.

Anstatt des Gitters kann als Fachbodenelement auch ein durchgehendes Blech verwendet werden, aus dem die Kantöffnungen vorzugsweise durch Ausstanzen ausgespart sind.

Ein Ausführungsbeispiel der Erfindung wird nachstehend anhand von Zeichnungen näher erläutert. Es zeigen
- Fig. 1: eine perspektivische Darstellung einer Fachbodenebene für ein Lagerregal,
- Fig. 2: eine perspektivische Teildarstellung von oben der Fachbodenebene von Fig. 1 im Auflagebereich eines Querträgers,

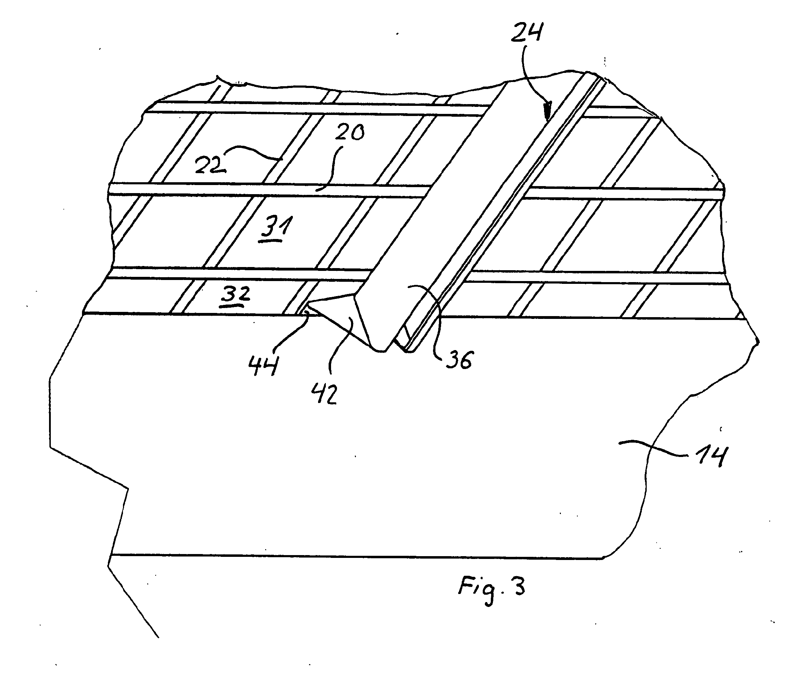

- Fig. 3: eine perspektivische Teildarstellung von unten der Fachbodenebene im Bereich der Auflage des Querträgers,

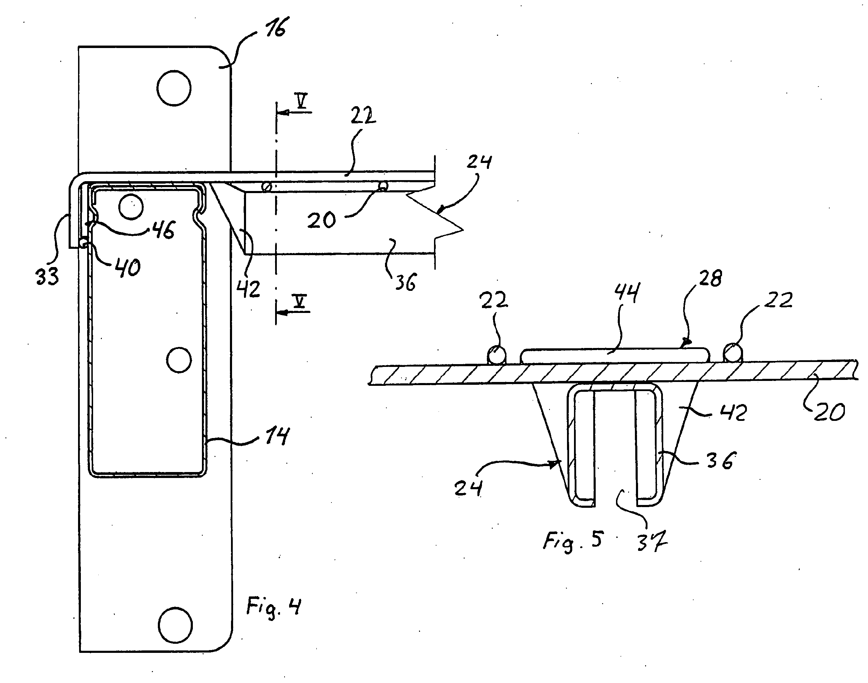

- Fig. 4: einen Querschnitt durch die Fachebene von Fig. 1 im Bereich eines Längsträgers,
- Fig. 5: den Schnitt V-V von Fig. 4.

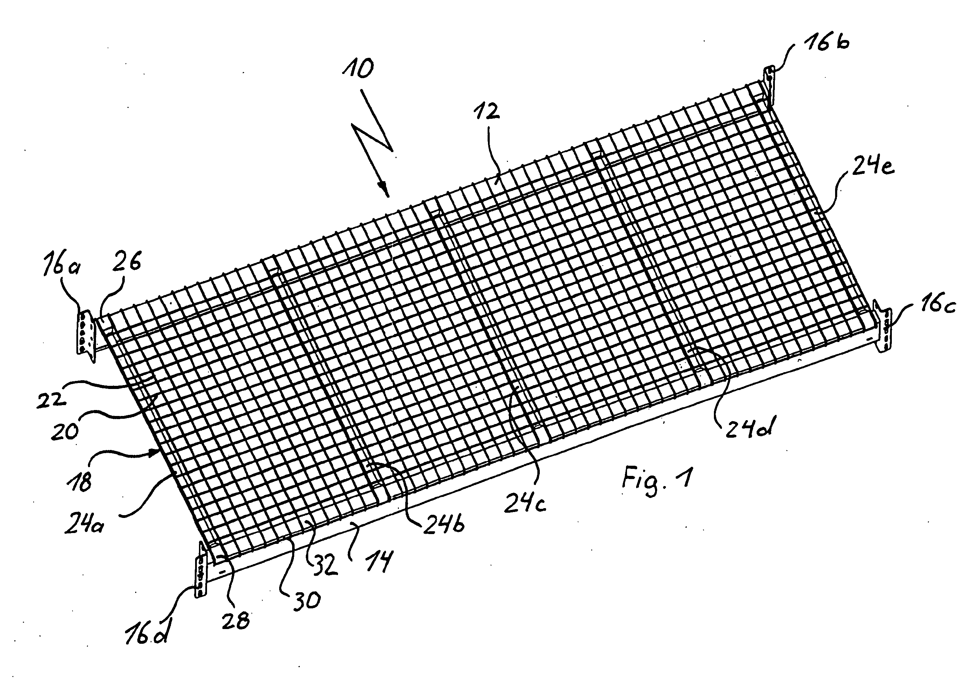

Die in Fig. 1 gezeigte Fachbodenebene 10 umfasst zwei parallel zueinander angeordnete Längsträger 12, 14 an deren Enden jeweils ein Verbindungsstück 16a, 16b, 16c, 16d zur Befestigung der Fachbodenebene an vertikalen Stützen eines Lagerregals befestigt sind. Auf den Längsträgern 12, 14 liegen mehrere (fünf) in Längsrichtung der Fachbodenebene 10 im Abstand angeordnete Querträger 24a, 24b, 24c, 24d und 24e auf. Außerdem ist ein Gitterelement 18, mit in Längsrichtung im Abstand verlaufenden Gitterstäben 20 und in Querrichtung verlaufenden Gitterstäben 22 so auf die Längsträger 12, 14 aufgelegt, dass seine nach unten abgekanteten Längsrandabschnitte 30 die Längsträger 12 bzw. 14 umgreifen. Gitteröffnungen 31 werden jeweils von zwei benachbarten Gitterstäben 20 und zwei benachbarten Gitterstäben 22 begrenzt.

Das Gitter 18 ist zur Bildung der Längsrandabschnitte 30 im Bereich der Außenkante der Längsträger 12, 14 durch Abkantung der Querstäbe 22 um eine Kantlinie KL um 90° nach unten gebogen. Durch den in Längsrichtung verlaufenden äußersten Gitterstab 40 und den ihm benachbarten in Längsrichtung verlaufenden Gitterstab 20 sowie durch jeweils zwei in Querrichtung verlaufende Gitterstäbe 22 werden Kantöffnungen 32 gebildet.

Die Querträger 24 weisen jeweils ein sich zwischen den Längsträgern 12, 14 erstreckendes Trägerelement 36 auf, das von einem Vierkantrohr gebildet wird, in dessen Unterseite ein Längsschlitz 37 vorgesehen ist. Die Oberseite des Trägerelements 36 bildet eine horizontale Auflagefläche 38, auf der die in Längsrichtung verlaufenden Gitterstäbe 20 aufliegen. Die Gitterstäbe 22 sind an der Oberseite der Gitterstäbe 20 befestigt. Die Höhendifferenz zwischen der horizontalen Auflagefläche 36 der Querträger 24 und der horizontalen Auflagefläche 34 der Längsträger 12, 14 entspricht dem Durchmesser der in Längsrichtung verlaufenden Gitterstäbe 20, so dass die in Querrichtung verlaufenden Gitterstäbe 22 auf der Auflagefläche 34 der Längsträger 12, 14 aufliegen, wenn die in Längsrichtung verlaufenden Gitterstäbe 20 auf der Auflagefläche 38 der Querträger 24 aufliegen.

An den beiden entgegengesetzten Enden der Trägerelemente 36 sind Hakenelemente 26, 28 vorgesehen, die auf den Längsträgern 12 bzw. 14 aufliegen und diese umgreifen. Die Hakenelemente 26, 28 umfassen einen mit dem jeweiligen Ende des Trägerelements 36 verbundenen Übergangsabschnitt 42 der in einen horizontalen Auflageschenkel 44 übergeht, der auf dem Längsträger 12 bzw.14 aufliegt. Der Auflageschenkel 44 geht in einen sich senkrecht nach unten erstreckenden freien Schenkel 46 über, der an der Außenseite des entsprechenden Längsträgers 12, 14 anliegt und dessen Stirnkante 48 an den äußersten in Längsrichtung verlaufenden Gitterstab 40 angrenzt.

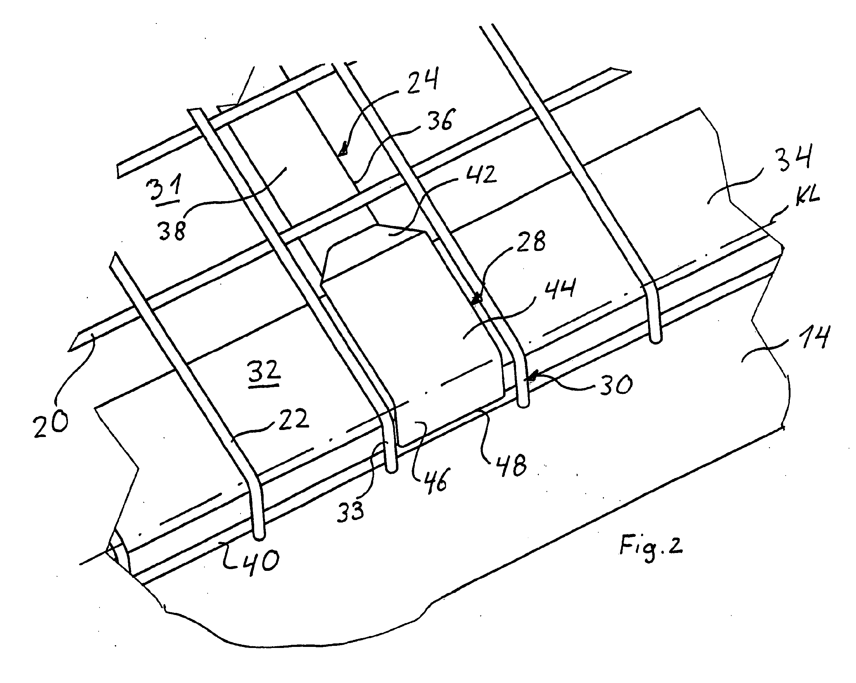

Wie insbesondere in Fig. 2 zu erkennen ist, ist das Hakenelement 28 im Wesentlichen rechteckig mit zwei parallelen und in geringem Abstand zu den in Querrichtung verlaufenden Gitterstäben 22 der Kantenöffnung 32 verlaufenden Längsrändern ausgebildet, so dass nur eine geringe seitliche Verschiebung der Querträger 24 möglich ist.

Für den Aufbau der Fachbodenebene 10 werden die Querträger 24a, 24b, 24c, 24d und 24e im Abstand mit ihren Hakenelementen 26, 28 auf die Längsträger 12, 14 aufgelegt und anschließend wird das Gitter 18 so aufgesetzt, dass die Hakenelemente 26, 28 in Kantenöffnungen 32 liegen. Durch die Anzahl der Querträger 24 kann die Tragfähigkeit der Fachbodenebene 10 bestimmt werden.

## Patentansprüche

1. Fachbodenebene für ein Lagerregal mit
zwei parallel zu einander angeordneten Längsträgern(12, 14) mit einer oberen Auflagefläche (34) und wenigstens einem Querträger (24), der mit seinen beiden Enden jeweils an einem der Längsträger (12, 14) angebracht ist, wobei
- ein ebenes Fachbodenelement (18) auf den Längsträgern (12,14) aufliegt, **dadurch gekennzeichnet, dass**
- nach unten abgekantete Längsrandabschnitte (30) an den beiden Längsrändern des Fachbodenelements (18) am unteren Rand jeweils mit einem in Längsrichtung verlaufenden Gitterstab (40) verbunden sind, wobei jeweils der Gitterstab (40) an der Außenseite der Längsträger (12, 14) im Wesentlichen anliegt,
- im Bereich der Kantlinie, um die die Längsrandabschnitte (30) abgekantet sind, Kantenöffnungen (32) in dem Fachbodenelement (18) vorgesehen sind, wobei sich jeweils zwei Kantenöffnungen (32) in Querrichtung des Fachbodenelements (18) gegenüberliegen, und
- an den Enden der Querträger (24) jeweils ein Hakenelement (28) vorgesehen ist, das einen auf dem zugeordneten Längsträger (12, 14) aufliegenden Auflageschenkel (44) und einen sich von dem Auflageschenkel (44) nach unten erstreckenden freien Schenkel (46) aufweist, der an die Außenseite des Längsträgers (12, 14) angrenzt, wobei jedes Hakenelement (28) in einer zugeordneten Kantenöffnung (32) angeordnet ist.

2. Fachbodenebene nach Anspruch 1, **dadurch gekennzeichnet, dass** der wenigstens eine Querträger (24) eine oberen Auflagefläche (38) umfasst, auf der das Fachbodenelement (18) aufliegt.

3. Fachbodenebene nach Anspruch 1 oder 2, **dadurch gekennzeichnet, dass**
- das Fachbodenelement von einem auf den Längsträgern (12, 14) und dem wenigstens einen Querträger (24) aufliegenden Gitter (18) gebildet wird, das in Längsrichtung im Abstand zueinander verlaufende Gitterlängselemente (20) und in Querrichtung im Abstand zueinander verlaufende Gitterquerelemente (22) aufweist und Gitteröffnungen (31) umfasst, die jeweils von zwei benachbarten Gitterlängselementen (20) und zwei benachbarten Gitterquerelementen (22) begrenzt werden, und
- die in Längsrichtung des Gitters (18) verlaufende Kantlinie (KL) in einem in Querrichtung zwischenliegenden Bereich von Kantenöffnungen (32) bildenden Gitteröffnungen verläuft.

4. Fachbodenebene nach einem der vorhergehenden Ansprüche, **dadurch gekennzeichnet, dass** die Kantenöffnungen (32) rechteckig sind und die Hakenelemente (28) so gestaltet sind, dass sie an die Gitterquerelemente (22) der zugeordneten Kantenöffnung (32) im Wesentlichen angrenzen.

5. Fachbodenebene nach Anspruch 1 oder 2, **dadurch gekennzeichnet, dass** Fachbodenelement von einem durchgehenden Blech gebildet wird, aus dem die Kantöffnungen vorzugsweise durch Ausstanzen ausgespart sind

6. Lagerregal mit wenigstens einer Fachbodenebene (18) nach einem der Ansprüche 1 bis 5.

## Claims

1. Shelf for a storage rack, having
two longitudinal carriers (12, 14) which are arranged parallel to one another and have an upper bearing surface (34), and at least one transverse carrier (24), which has its two ends fitted in each case on one of the longitudinal carriers (12, 14), wherein
- a planar shelf element (18) rests on the longitudinal carriers (12, 14),
**characterized in that**
- downwardly angled longitudinal-periphery portions (30) on the two longitudinal peripheries of the shelf element (18) are connected at the lower periphery in each case to a lattice bar (40) running in the longitudinal direction, wherein the lattice bar (40) in each case essentially butts against the outside of the longitudinal carriers (12, 14),
- edge openings (32) are provided in the shelf element (18) in the region of the angling line, about which the longitudinal-periphery portions (30) are angled, wherein in each case two edge openings (32) are located opposite one another in the transverse direction of the shelf element (18), and
- a respective hook element (28) is provided at the ends of the transverse carrier (24), and this hook element has a bearing leg (44) which rests on the associated longitudinal carrier (12, 14), and a free leg (46), which extends downwards from the bearing leg (44) and is adjacent to the outside of the longitudinal carrier (12, 14), wherein each hook element (28) is arranged in an associated edge opening (32).

2. Shelf according to Claim 1, **characterized in that** the at least one transverse carrier (24) comprises an upper bearing surface (38), on which the shelf element (18) rests.

3. Shelf according to Claim 1 or 2, **characterized in that**
- the shelf element is formed by a lattice (18) which rests on the longitudinal carriers (12, 14) and the at least one transverse carrier (24), has longitudinally spaced-apart longitudinal lattice elements (20) and transversely spaced-apart transverse lattice elements (22) and comprises lattice openings (31) which are bounded in each case by two adjacent longitudinal lattice elements (20) and two adjacent transverse lattice elements (22), and
- the angling line (KL) which runs in the longitudinal direction of the lattice (18), extends in an intermediate region, in the transverse direction, of lattice openings which form edge openings (32).

4. Shelf according to one of the preceding claims, **characterized in that** the edge openings (32) are rectangular and the hook elements (28) are configured such that they are essentially adjacent to the transverse lattice elements (22) of the associated edge opening (32).

5. Shelf according to Claim 1 or 2, **characterized in that** the shelf element is formed by a continuous metal sheet in which the edge openings are made preferably by being punched out.

6. Storage rack having at least one shelf (18) according to one of Claims 1 to 5.

## Revendications

1. Surface de posage pour un rayonnage de stockage, avec deux longerons (12, 14) disposés parallèlement l'un à l'autre avec une face d'appui supérieure (34) et au moins une traverse (24), qui est posée par ses deux extrémités respectivement sur un des longerons (12, 14), dans laquelle un élément de posage plan pour un rayonnage de stockage (18) repose sur les longerons (12, 14), **caractérisée en ce que**
- des parties de bord longitudinal (30) pliées vers le bas sur les deux bords longitudinaux de l'élément de posage pour un rayonnage de stockage (18) sont assemblées au bord inférieur respectivement à une barre de grille (40) s'étendant en direction longitudinale, dans laquelle la barre de grille (40) est respectivement appliquée essentiellement sur le côté extérieur des longerons (12, 14),
- dans la région de la ligne de pliage, autour de laquelle les parties de bord longitudinal (30) sont pliées, il est prévu des ouvertures de bord (32) dans l'élément de posage pour un rayonnage de stockage (18), dans laquelle deux ouvertures de bord (32) sont chaque fois opposées en direction transversale de l'élément de posage pour un rayonnage de stockage (18), et
- aux extrémités des traverses (24), il est chaque fois prévu un élément de crochet (28), qui présente une aile d'appui (44) reposant sur le longeron associé (12, 14) et une aile libre (46) s'étendant vers le bas à partir de l'aile d'appui (44), et qui est adjacente au côté extérieur du longeron (12, 14), dans laquelle chaque élément de crochet (28) est disposé dans une ouverture de bord associée (32).

2. Surface de posage pour un rayonnage de stockage selon la revendication 1, **caractérisée en ce que** ladite au moins une traverse (24) comprend une face d'appui supérieure (38), sur laquelle repose l'élément de posage pour un rayonnage de stockage (18).

3. Surface de posage pour un rayonnage de stockage selon la revendication 1 ou 2, **caractérisée en ce que**
- l'élément de posage pour un rayonnage de stockage est formé par une grille (18) reposant sur les longerons (12, 14) et sur ladite au moins une traverse (24), qui présente des éléments de grille longitudinaux (20) s'étendant à distance l'un de l'autre en direction longitudinale et des éléments de grille transversaux (22) s'étendant à distance l'un de l'autre en direction transversale et qui comprend des ouvertures de grille (31), qui sont chacune limitées par deux éléments de grille longitudinaux voisins (20) et par deux éléments de grille transversaux voisins (22), et
- la ligne de pliage (KL) s'étendant en direction longitudinale de la grille (18) s'étend dans une région, intermédiaire en direction transversale, d'ouvertures de grille formant des ouvertures de bord (32).

4. Surface de posage pour un rayonnage de stockage selon l'une quelconque des revendications précédentes, **caractérisée en ce que** les ouvertures de bord (32) sont rectangulaires et les éléments de crochet (28) sont configurés de telle façon qu'ils soient essentiellement adjacents aux éléments de grille transversaux (22) des ouvertures de bord associées (32).

5. Surface de posage pour un rayonnage de stockage selon la revendication 1 ou 2, **caractérisée en ce que** l'élément de posage pour un rayonnage de stockage est formé par une tôle continue, dans laquelle les ouvertures de bord ont été réalisées de préférence par estampage.

6. Rayonnage de stockage avec au moins une surface de posage pour un rayonnage de stockage (18) selon l'une quelconque des revendications 1 à 5.
